(19) Europäisches Patentamt
European Patent Office
Office européen des brevets

(11) **EP 2 331 854 B1**

(12) **EUROPEAN PATENT SPECIFICATION**

(45) Date of publication and mention
of the grant of the patent:
**12.06.2013   Bulletin 2013/24**

(51) Int Cl.:
*D04H 13/00* (2006.01)     *B32B 5/26* (2006.01)
*A47L 13/16* (2006.01)     *B32B 27/02* (2006.01)
*B32B 27/32* (2006.01)     *B32B 27/36* (2006.01)

(21) Application number: **09812278.1**

(22) Date of filing: **04.09.2009**

(86) International application number:
**PCT/US2009/056028**

(87) International publication number:
**WO 2010/028238 (11.03.2010 Gazette 2010/10)**

(54) **COMPOSITE WIPE**

WISCHTUCH AUS VERBUNDSTOFF

LINGETTE COMPOSITE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority:  **05.09.2008   US 205478**

(43) Date of publication of application:
**15.06.2011   Bulletin 2011/24**

(73) Proprietor: **Nutek Disposables, Inc.
McElhattan, PA 17748 (US)**

(72) Inventors:
• **DAMAGHI, Robin
Great Neck
NY 11021 (US)**
• **CHILD, William
Lock Haven
PA 17745 (US)**
• **DUANE, Lawrence, E.
Wellesly
MA 02481 (US)**

(74) Representative: **Manitz, Finsterwald & Partner
GbR
Martin-Greif-Strasse 1
80336 München (DE)**

(56) References cited:
**WO-A1-98/55295          WO-A1-99/46119
US-A- 5 229 191          US-A1- 2004 097 158
US-A1- 2004 121 135      US-A1- 2004 121 135
US-A1- 2005 136 778      US-A1- 2005 182 198
US-A1- 2006 065 482      US-A1- 2007 202 766
US-A1- 2007 202 766**

**Description**

**FIELD OF THE INVENTION**

The present invention relates to wipes for sanitary purposes, and in particular to wipes having a multi-layer structure.

**BACKGROUND**

Sanitary wipes are well known commercial consumer products that have been used for baby wipes, hand wipes, household cleaning wipes, industrial wipes and the like. Conventional wipes include a single layer of substantially homogenous material. For example, some singe layer wipes have included an air laid web of fibers which are uniformly mixed or distributed throughout the web. Such singe layer wipes have also included polymeric fibers such as polyester, polyethylene and polypropylene and natural fibers or synthetic fibers such as cellulosic fibers.

However, with such single layer wipes, it is difficult to obtain the necessary balance of physical characteristics. In particular, depending on the application, physical characteristics of a wipe, such as softness, flexibility, strength, thickness, texture, integrity, opacity and resiliency, need to be optimized.

Document US 5,229,191 discloses a composite non-woven fabric comprising a hydrophobic nonwoven web, a non-woven web of thermoplastic meltblown microfibers and a hydrophilic nonwoven web comprising staple fibers.

Reference WO 98/55295 A1 discloses a composite non-woven fabric which comprises a prebonded spunbonded-meltblown-spunbonded fiber laminate which is thermally bonded to a non-woven layer of absorbent, resilient and binder fibers at a plurality of discrete bonding points.

In document US 2004/0121135 A1 a multilayer ultra white nonwoven wipe material comprising cellulose pulp, bicomponent fibers and a latex binder is disclosed.

**SUMMARY OF THE INVENTION**

A wipe according to an exemplary embodiment of the present invention comprises: at least one nonwoven web layer of discontinuous fibers; and a spunbond-meltblown-spunbond web layer of continuous fibers positioned in facing and adjacently contacting relation with the at least one nonwoven web layer, wherein the at least one non-woven web layer and the spunbond-meltblown-spunbond web layer are bonded together by hydroentanglement, and wherein the wipe has an opacity index of at least 1.3, where the opacity index is calculated based on the following equation:

$$\text{opacity index} = (\text{opacity of the wipe})/(\text{total basis weight of the wipe}).$$

In at least one embodiment, the at least one nonwoven web layer comprises a first nonwoven web layer and a second nonwoven web layer, the spunbond-meltblown-spunbond web layer disposed between the first and second nonwoven web layers.

In at least one embodiment, the discontinuous fibers comprise rayon fibers, natural fibers and polymeric fibers.

In at least one embodiment, the natural fibers comprise at least one of the following natural fiber types: cotton, bamboo, hemp, polylactide and pulp.

In at least one embodiment, the polymeric fibers comprise at least one of the following polymeric fiber types: polypropylene and polyester.

In at least one embodiment, the at least one nonwoven web layer is one of the following types of web layers: carded fiber web layer, air-laid fiber web layer and wet-laid fiber web layer.

In at least one embodiment, the at least one nonwoven web layer has a basis of weight within the range of approximately 5 gsm to approximately 55 gsm.

In at least one embodiment, the spunbond-meltblown-spunbond web layer comprises polypropylene.

In at least one embodiment, the spunbond-meltblown-spunbond web layer comprises polylactide.

In at least one embodiment, the spunbond-meltblown-spunbond web layer is unbonded.

In at least one embodiment, the spunbond-meltblown-spunbond web layer is bonded.

In at least one embodiment, the spunbond-meltblown-spunbond web layer has a basis of weight within the range of approximately 5 gsm to approximately 35 gsm.

In at least one embodiment, the wipe further comprises a liquid.

In at least one embodiment, the total basis weight of the wipe is at least 20 gsm.

In at least one embodiment, the opacity of the wipe is at least 40%.

In at least one embodiment, the ratio of tensile strength in the machine direction of the wipe relative to tensile strength in the cross direction of the wipe is within the range of approximately 2.0 to approximately 3.0.

In at least one embodiment, the ratio of percentage elongation in the cross direction of the wipe relative to percentage elongation in the machine direction of the wipe is within the range of approximately 1.0 to approximately 1.5.

In at least one embodiment, the wipe has an opacity-cross dimensional tensile strength index of at least 0.5, where the opacity-cross dimensional tensile strength index is calculated based on the following equation:

$$\text{opacity-cross dimensional tensile strength index} = ((\text{opacity of the wipe})(\text{cross dimensional tensile strength of the wipe}))/(\text{total basis weight of the wipe})^2.$$

In at least one embodiment, the wipe has a combination index of at least 0.7, where the combination index is calculated based on the following equation:

$$\text{combination index} = [((\text{opacity of the wipe})(\text{cross dimensional tensile strength of the wipe})(1/\text{cross dimensional elongation of the wipe}))/(\text{total basis weight of the wipe})^3](10000).$$

A method of forming a wipe according to an exemplary embodiment of the present invention comprises the steps of: forming at least one nonwoven web layer of discontinuous fibers; forming a spunbond-meltblown-spunbond web layer of continuous fibers; and bonding the at least one nonwoven web layer with the spunbond-meltblown-spunbond web layer by hydroentanglement, wherein the wipe has an opacity index of at least 1.3, where the opacity index is calculated based on the following equation:

$$\text{opacity index} = (\text{opacity of the wipe})/(\text{total basis weight of the wipe}).$$

In at least one embodiment, the step of forming the at least one nonwoven web layer comprises forming a first nonwoven web layer and a second nonwoven web layer.

In at least one embodiment, the method further comprises disposing the spunbond-meltblown-spunbond web layer between the first and second nonwoven web layers.

In at least one embodiment, the step of forming the at least nonwoven web layer comprises using at least one of the following types of web-formation processes: carding, airlaying and wetlaying.

In at least one embodiment, the method further comprises bonding the at least one nonwoven web layer.

In at least one embodiment, the step of bonding the at least one nonwoven web layer comprises using at least one of the following bonding processes: hydroentanglement, thermal bonding, chemical bonding and mechanical bonding.

In at least one embodiment, the method further comprises bonding the spunbond-meltblown-spunbond web layer.

**BRIEF DESCRIPTION OF THE DRAWINGS**

The above and related objects, features and advantages of the present invention will be more fully understood by reference to the following, detailed description of the preferred, albeit illustrative, embodiment of the present invention when taken in conjunction with the accompanying figures, wherein:

FIG. 1 is a cross-sectional view of a wipe according to an exemplary embodiment of the present invention;

FIG. 2 is a cross-sectional view of a wipe according to another exemplary embodiment of the present invention; and

FIG. 3 is as flow-chart showing a method of forming a wipe according to an exemplary embodiment of the present invention.

FIG. 4 is a chart showing opacity versus basis weight for wipes according to various exemplary embodiments of the present invention and comparative examples;

FIG. 5 is a chart showing tensile strength ratio versus basis weight for wipes according to various exemplary embodiments of the present invention and comparative examples;

FIG. 6 is a chart showing elongation ratio versus basis weight for wipes according to various exemplary embodiments of the present invention and comparative examples;

FIG. 7 is a chart showing opacity-cross dimensional tensile strength index versus basis weight for wipes according to various exemplary embodiments of the present invention and comparative examples; and

FIG. 8 is a chart showing combination index versus basis weight for wipes according to various exemplary embodiments of the present invention and comparative examples.

## DETAILED DESCRIPTION OF THE PREFERRED EMBODIMENT(S)

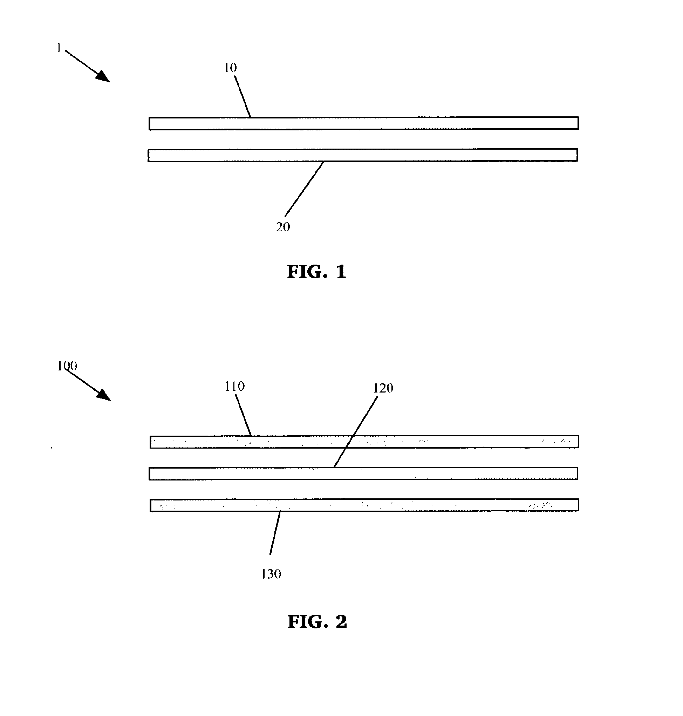

FIG. 1 is a cross-sectional view of a wipe, generally designated by reference number 1, according to an exemplary embodiment of the present invention. The wipe 1 includes a nonwoven web layer 10 and a spunbond-meltblown-spunbond (SMS) web layer 20 positioned in facing and adjacently contacting relation with the nonwoven web layer 10. As explained in further detail below, the SMS web layer 20 provides the wipe 1 with increased opacity, thereby giving the wipe 1 the appearance of a higher weight fabric, without adding significantly to the overall weight of the wipe 1.

The nonwoven web layer 10 is preferably composed of discontinuous fibers of rayon (viscose), in addition to natural discontinuous fibers and polymeric discontinuous fibers. The natural discontinuous fibers used in the nonwoven web layer 10 may be made of, for example, cotton, pulp, bamboo, hemp, or blends of these materials. The polymeric discontinuous fibers used in the nonwoven web layer 10 may be made of, for example, polypropylene or polyester. In another exemplary embodiment, more eco-friendly polymeric materials may be used, such as, for example, polylactide (PLA).

The nonwoven web layer 10 may be formed using any suitable nonwoven process, such as, for example, carding, wetlaying and airlaying processes. The basis weight of the nonwoven web layer 10 is preferably within the range of approximately 5 gsm to approximately 55 gsm. In a preferred embodiment, the nonwoven web layer 10 has a basis weight of 33 gsm. In another preferred embodiment, the nonwoven web layer 10 has a basis weight of 55 gsm.

The SMS web layer 20 is preferably composed of continuous fibers of polymeric material. The polymeric material may be, for example, polyolefins such as polypropylene and polyethylene, polyamides, and polyesters. In another exemplary embodiment, more eco-friendly polymeric materials may be used, such as, for example, polylactide (PLA).

The SMS web layer 20 may be bonded or unbonded. The SMS web layer 20 may be unbonded in that multiple beams of spunbond and meltblown in combination to create an SMS structure can be installed directly into the wipe production line instead of a roll unwind to introduce a previously formed SMS fabric. If bonded, the SMS web layer 10 may be bonded using any suitable bonding process, such as, for example, thermal bonding, hydroentanglement, chemical bonding and mechanical bonding. The SMS web layer 20 preferably has a basis weight within the range of approximately 5 gsm to 35 gsm. In a preferred embodiment, the SMS web layer 20 has a basis weight of 12 gsm. In another preferred embodiment, the SMS web layer 20 has a basis weight of 13.5 gsm. The basis weight of the SMS web layer 20 is selected so that the overall appearance of the wipe 1 is improved by providing increased opacity, increased fabric thickness and improved whiteness. Further, the inclusion of the SMS web layer 20 improves the tensile strength of the wipe 1, without having to increase the overall basis weight of the wipe 1. The SMS web layer 20 may also include a colorant, such as, for example, $TiO_2$, to further increase the opacity of the wipe 1. In an exemplary embodiment, the amount of colorant added to the SMS web layer 20 may be as high as approximately 5% by weight. In an exemplary embodiment of the present invention, the SMS web layer 20 is an SMS product commercially available from First Quality Nonwovens, of Hazleton, Pennsylvania.

FIG. 2 is a cross-sectional view of a wipe, generally designated by reference number 100, according to another exemplary embodiment of the present invention. The wipe 100 includes a first outer nonwoven web layer 110, a second outer nonwoven web layer 130 and an SMS web layer 120 disposed between the first and second outer nonwoven web layers 110, 130. The first and second nonwoven web layers 110, 130 may have the same structure as the nonwoven web layer 10 described above, including polymeric and natural discontinuous fibers. The SMS web layer 120 may have the same structure as the SMS layer 20 described above, including continuous fibers of polymeric material.

The wipes described herein may also be impregnated with a liquid, so that the wipe becomes a wet wipe. The liquid may be any solution that can be absorbed into or that resides on the wipe, and may include any suitable components that provide the desired wiping properties. For example, the components may include water, emollients, surfactants, fragrances, preservatives, chelating agents, pH buffers, solvents and other cleaning or enhancing agents such as those used in household/industrial applications or combinations thereof as are well known to those skilled in the art. The liquid may also include lotions and/or medicaments.

The wipe described herein may also be subjected to any number and variety of post-processing steps, including, for example, hydro-embossing, thermal embossing, transfer printing (colors or textures) and spray coating.

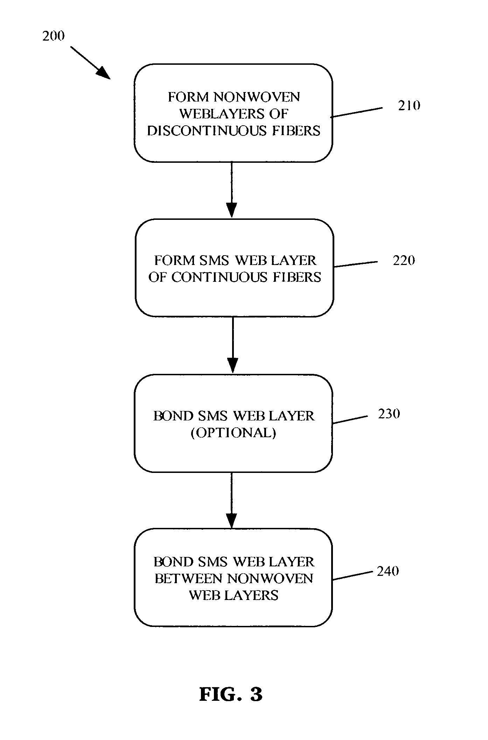

FIG. 3 is a flowchart showing a method, generally designated by reference number 200, for making a wipe according to an exemplary embodiment of the present invention. In step S210, two nonwoven web layers of discontinuous fibers are formed using any suitable nonwoven process, such as, for example, carding, wetlaying and airlaying processes. The nonwoven web layers may include discontinuous fibers of rayon, in addition to natural discontinuous fibers and polymeric discontinuous fibers. The natural discontinuous fibers used in the nonwoven web layers may be made of, for example, cotton, pulp, bamboo, hemp, or blends of these materials. The polymeric discontinuous fibers used in the nonwoven web layers may be made of, for example, polypropylene or polyester. In another exemplary embodiment, more eco-friendly polymeric materials may be used, such as, for example, polylactide (PLA).

In step S220, a web layer of continuous fibers is formed using a spunbond-meltblown-spunbond process. The continuous fibers may be polymeric material, such as, for example, polyolefins such as polypropylene and polyethylene, polyamides, and polyesters. In an exemplary embodiment, more eco-friendly polymeric materials may be used, such as, for example, polylactide (PLA). In an alternative embodiment, a preformed roll of SMS may be provided, where the SMS roll is either bonded or unbonded.

In step S230, the SMS web layer formed in step S220 is subjected to a bonding process. The bonding process may include any suitable bonding process, such as, for example, thermal bonding, hydroentanglement, chemical bonding and mechanical bonding. It should be appreciated that step S230 is optional, and in other exemplary embodiments of the present invention the SMS web layer may be left unbonded.

In step S240, the SMS web layer is bonded between the two nonwoven web layers to form the wipe. The three layers are bonded together using hydroentanglement

It should be appreciated that the method of forming the wipe according to the present invention is not limited to the above-described method. For example, in other exemplary embodiments, the bonding of the SMS web layer may take place at the same time as the bonding of the SMS web layer to the nonwoven web layers. Also, the method may include an additional step of impregnating the wipe with fluid, so as to form a wet wipe.

The following examples illustrate the advantages of the present invention:

## EXAMPLE O (EO)

A three layer composite was provided. Each outer card web layer had a basis weight of approximately 10 gsm and was made of viscose and polyester, where the blend weight ratio was 50/50, and the inner layer had a 12 gsm SMS structure commercially available from First Quality Nonwovens, of Hazelton, Pennsylvania. The total composition was hydroentangled and hydropatterned using a square design. The three layer composite was subjected to the following standard test procedures, which are well known and commonly used in the industry:

Tensile/Elongation: EDANA: ERT 20.2-89
Thickness: EDANA: ERT 30.5-99
Opacity: ASTM: E 1347
Basis Weight: ASTM: D 6242-98

## EXAMPLE 1 (E1)

A two layer composite was provided. One layer of the composite was a 13 gsm card web made of viscose and polyester, where the viscose to polyester weight ratio was 30/70. The other layer was a 20 gsm SMS structure commercially available from First Quality Nonwovens, of Hazelton, Pennsylvania. The total composition was hydroentangled only, and not hydropatterned. The two layer composition was subjected to the same test procedures described in Example 0.

## EXAMPLE 2 (E2)

The same structure as Example 1 was provided, but with a slightly lower basis weight, with the card web weighing 12 gsm. The structure was subjected to the same test procedures described in Example 0.

## EXAMPLE 3 (E3)

The same structure as Example 1 was provided, but with a slightly lower basis weight, with the card web weighing 12 gsm. The structure was subjected to the same test procedures described in Example 0.

## EXAMPLE 4 (E4)

The same structure as Example 1 was provided, but with a slightly lower basis weight, with the card web weighing 10 gsm. The total composite was hydroentangled and hydropatterned using a square design. The structure was subjected to the same test procedures described in Example 0.

### EXAMPLE 5 (E5)

The same structure as Example 1 was provided, but with a slightly lower basis weight, with the card web weighing 10 gsm. The total composite was hydroentangled and not hydropatterned. The structure was subjected to the same test procedures described in Example 0.

### COMPARATIVE EXAMPLE 1 (CE1)

A 100 % carded web hydroentangled structure was provided. The carded web was made of viscose and polyester, where the viscose to polyester weight ratio was 30/70. The total composition was hydroentangled and hydropatterned using a square design. The structure was subjected to the same test procedures described in Example 0.

### COMPARATIVE EXAMPLE 2 (CE2)

A 100 % carded web hydroentangled structure was provided. The carded web was made of viscose and polyester, where the viscose to polyester weight ratio was 30/70. This product was not hydropatterned. The structure was subjected to the same test procedures described in Example 0.

### COMPARATIVE EXAMPLE 3 (CE3)

A 100 % carded web hydroentangled structure was provided. The carded web was made of viscose and polyester, where the viscose to polyester weight ratio was 50/50. The structure was subjected to the same test procedures described in Example 0.

### COMPARATIVE EXAMPLE 4 (CE4)

A 100 % carded web hydroentangled structure was provided. The carded web was made of viscose and polyester, where the viscose to polyester weight ratio was 30/70. The total composition was hydroentangled and hydropatterned using a square design. The structure was subjected to the same test procedures described in Example 0.

### COMPARATIVE EXAMPLE 5 (CE5)

A 100 % carded web hydroentangled structure was provided having a lower basis weight than that of Comparative Example 4. The carded web was made of viscose and polyester, where the viscose to polyester weight ratio was 30/70. The total composition was hydroentangled and hydropatterned using a square design. The structure was subjected to the same test procedures described in Example 1.

### COMPARATIVE EXAMPLE 6 (CE6)

A 100 % carded web hydroentangled structure was provided. The carded web was made of viscose, polypropylene and reclaim fiber, where the blend weight ratio is 29/66/5, respectively. The total composition was hydroentangled and hydropatterned using a square design. The structure was subjected to the same test procedures described in Example 0.

### COMPARATIVE EXAMPLE 7 (CE7)

A 100 % carded web hydroentangled structure was provided. The carded web was made of viscose and polypropylene, where the viscose to polypropylene weight ratio is 30/70. The total composition was hydroentangled and not hydropatterned. The structure was subjected to the same test procedures described in Example 0.

### COMPARATIVE EXAMPLE 8 (CE8)

A 100 % carded web hydroentangled structure was provided having a lower basis weight than that of Comparative Example 3. The carded web was made of viscose and polyester, where the viscose to polyester weight ratio was 50/50. The structure was subjected to the same test procedures described in Example 0.

## COMPARATIVE EXAMPLE 9 (CE9)

A 100 % carded web hydroentangled structure was provided having a higher basis weight than that of Comparative Example 3. The carded web was made of cotton, viscose and polyester, where the cotton, viscose to polyester weight ratio was 15/35/50. The structure was subjected to the same test procedures described in Example 0.

## COMPARATIVE EXAMPLE 10 (CE10)

A three-layer composite was provided having outer card web layers and an inner layer of spunbond fabric. Each card web layer had a basis weight of 10 gsm and was made of viscose and polyester having a blend ratio of 50/50. The inner layer had a basis weight of 10 gsm. The total 30 gsm composite was hydroentangled and not hydropatterned.
The results of these tests are provided in Table 1, shown below:

| | Patent Code | GSM | Opacity (%) | Thickness (mm) | Wipe Tensile Strength (N/5cm) | | | Elongation (%): | | |
|---|---|---|---|---|---|---|---|---|---|---|
| | | | | | MD | CD | MD/CD | MD | CD | CD/MD |
| EXAMPLES | E0 | 31 | 51 | 0.56 | 49 | 19 | 2.6 | 67.2 | 82.9 | 1.2 |
| | E1 | 33 | 56 | 0.50 | 41 | 21 | 1.9 | 64.3 | 76.2 | 1.2 |
| | E2 | 32 | 50 | 0.49 | 41 | 14 | 2.9 | 60.4 | 77.7 | 1.3 |
| | E3 | 32 | 51 | 0.54 | 52 | 20 | 2.7 | 73.4 | 86.7 | 1.2 |
| | E4 | 30 | 51 | 0.55 | 42 | 19 | 2.2 | 73.7 | 82.7 | 1.1 |
| | E5 | 30 | 48 | 0.55 | 52 | 19 | 2.7 | 73.9 | 81.2 | 1.1 |
| COMPARATIVE EXAMPLES | CE1 | 31 | 35 | 0.57 | 39 | 9 | 4.5 | 59.4 | 176.0 | 3.0 |
| | CE2 | 33 | 39 | 0.55 | 54 | 12 | 4.5 | 55.4 | 175.3 | 3.2 |
| | CE3 | 42 | 52 | 0.51 | 94 | 22 | 4.3 | 34.2 | 128.3 | 3.8 |
| | CE4 | 44 | 46 | 0.72 | 74 | 20 | 3.6 | 61.6 | 156.9 | 2.5 |
| | CE5 | 40 | 44 | 0.72 | 63 | 16 | 4.0 | 62.9 | 149.7 | 2.4 |
| | CE6 | 42 | 44 | 0.63 | 79 | 18 | 4.4 | 54.0 | 170.6 | 3.2 |
| | CE7 | 39 | 46 | 0.48 | 49 | 10 | 5.0 | 41.4 | 161.6 | 3.9 |
| | CE8 | 44 | 55 | 0.40 | 79 | 18 | 4.4 | 20.9 | 90.5 | 4.3 |
| | CE9 | 53 | 57 | 0.66 | 97 | 35 | 2.8 | 39.9 | 106.5 | 2.7 |
| | C10 | 32 | 35 | 0.41 | 40 | 18 | 2.2 | 46.4 | 120.9 | 2.6 |

## TABLE 1

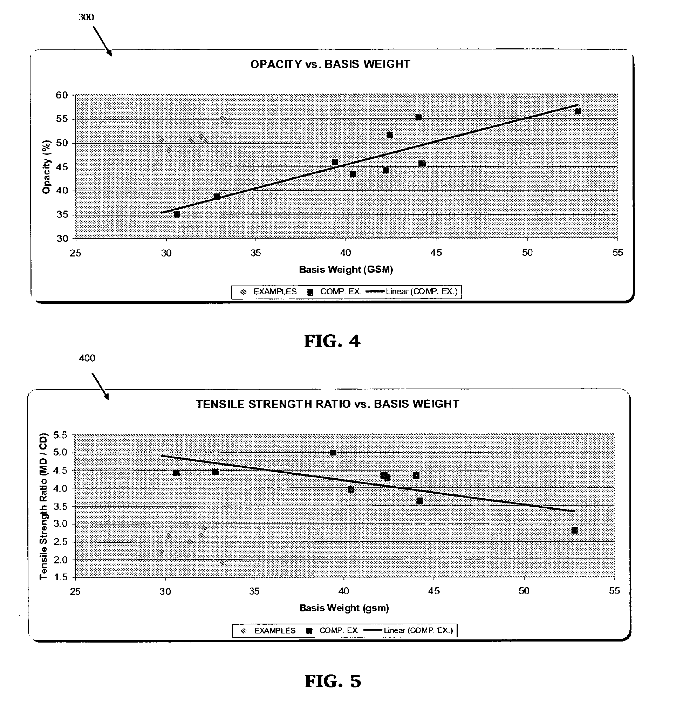

From Table 1, the opacity data is charted against the basis weight data for each of the Examples and Comparative Examples, and the result is shown in the chart provided in FIG. 4, generally designated by reference number 300. Chart 300 shows that Examples 0-5 of the present invention consistently provide higher opacity at lower basis weights as compared to Comparative Examples 1-9, which are standard spunlace products, and a higher opacity at a similar basis weight as compared to Comparative Example 10, which is a composite structure. This illustrates one of the advantages of the present invention, in that a wipe is provided that is relatively light in weight, while still offering the visual security of high opacity. In this regard, an opacity index was calculated for each of the above examples using Equation 1, shown below:

$$\text{opacity index} = (\text{opacity of wipe})/(\text{total basis weight of wipe}) \qquad (1)$$

The results of the opacity index calculations for each of the examples are provided in Table 2, shown below:

| | Patent Code | C OPACITY (%) | D MD/CD TENSILE RATIO | E CD/MD ELONG RATIO | F BASIS WT (GSM) | Opacity Index (C / F) |
|---|---|---|---|---|---|---|
| EXAMPLES | E0 | 50.7 | 2.5 | 1.2 | 31.4 | 1.6 |
| | E1 | 55.1 | 1.9 | 1.2 | 33.2 | 1.7 |
| | E2 | 50.3 | 2.9 | 1.3 | 32.2 | 1.6 |
| | E3 | 51.3 | 2.7 | 1.2 | 32.0 | 1.6 |
| | E4 | 50.6 | 2.2 | 1.1 | 29.8 | 1.7 |
| | E5 | 48.5 | 2.7 | 1.1 | 30.2 | 1.6 |
| COMPARATIVE EXAMPLES | CE1 | 35.1 | 4.5 | 3.0 | 30.6 | 1.1 |
| | CE2 | 38.8 | 4.5 | 3.2 | 32.8 | 1.2 |
| | CE3 | 51.7 | 4.3 | 3.8 | 42.4 | 1.2 |
| | CE4 | 45.7 | 3.6 | 2.5 | 44.2 | 1.0 |
| | CE5 | 43.5 | 4.0 | 2.4 | 40.4 | 1.1 |
| | CE6 | 44.3 | 4.4 | 3.2 | 42.2 | 1.0 |
| | CE7 | 46.0 | 5.0 | 3.9 | 39.4 | 1.2 |
| | CE8 | 55.3 | 4.4 | 4.3 | 44.0 | 1.3 |
| | CE9 | 56.6 | 2.8 | 2.7 | 52.8 | 1.1 |
| | CE10 | 34.6 | 2.2 | 2.6 | 32.0 | 1.1 |

## TABLE 2

Table 2 shows that Examples 0-5 of the present invention consistently provide a higher opacity index as compared to other wipe products. In particular, the wipe according to various exemplary embodiments of the present invention may have an opacity index of at least 1.3, while the opacity index of other wipe products are typically lower than this value.

Also, from Table 1, the tensile strength ratio data is charted against the basis weight data for each of the Examples and Comparative Examples, and the results are shown in the chart provided in FIG. 5, generally designated by reference number 400. The tensile strength ratio may be defined as the ratio between the tensile strength of the wipe in the machine direction and the tensile strength of the wipe in the cross direction. Chart 400 shows that Examples 0-5 of the present invention consistently provide a lower tensile strength ratio at lower basis weights as compared to Comparative Examples 1-9. A comparable tensile strength ratio was achieved with the composite structure of Comparative Example 10, but as noted above, Comparative Example 10 did not achieve as high an opacity as Examples 1-9. This illustrates another advantage of the present invention, in that a wipe is provided that is relatively light in weight with improved tensile strength characteristics, in that the tensile strength in the cross direction is relatively closer in value to the tensile strength in the machine direction as compared to other wipe structures. In conventional non-woven manufacturing processes, the machine directional strength is typically much greater than the cross directional strength. Unfortunately, the cross directional strength can serve as the "weak link" when it comes to providing adequate fabric strength for the consumer. Also, the consumer appeal of the higher machine directional strength is lessened due to the significantly lower cross direction strengths. The present invention provides a better quality wipe with more uniform multi-directional strength by increasing cross directional strength relative to that achieved in the machine direction.

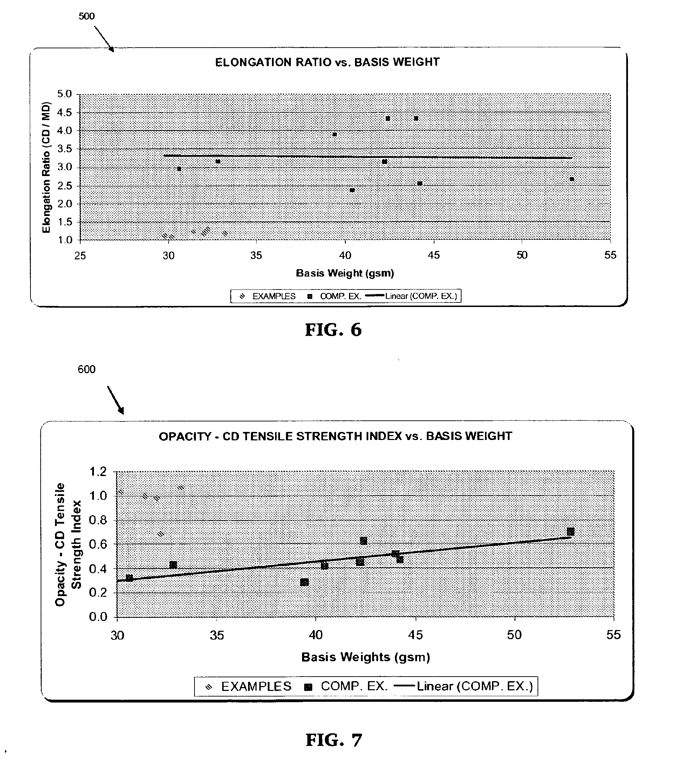

Also, from Table 1, the elongation ratio data is charted against the basis weight data for each of the Examples and Comparative Examples, and the results are shown in the chart provided in FIG. 6, generally designated by reference number 500. The elongation ratio may be defined as the ratio between the percent elongation of the wipe in the cross direction and the percent elongation of the wipe in the machine direction. Chart 500 shows that Examples 0-5 of the present invention consistently provide a lower elongation ratio at lower basis weights as compared to Comparative Examples 1-9. This illustrates another advantage of the present invention, in that a wipe is provided that is relatively light in weight with improved elongation characteristics, in that elongation percentage in the cross direction is relatively closer in value to elongation percentage in the machine direction as compared to other wipe structures. In conventional non-woven manufacturing processes, the cross directional elongation is typically much greater than the machine directional elongation. Unfortunately, the cross directional elongation can serve as the "weak link" when it comes to providing adequate wipe integrity for the consumer. In particular, the consumer appeal of a wipe with relatively higher cross directional elongation can be low since the elongation of the fabric can result in significantly different length and width dimensions of the resultant wipe. The present invention provides a better quality wipe with more uniform multi-directional elongation by decreasing the cross directional elongation so as to be closer to the elongation achieved in the machine direction.

In general, the wipe according to various exemplary embodiments of the present invention provides improved quality relative to conventional wipe structures, and in particular is able to provide a combination of increased opacity, increased cross directional tensile strength, and reduced cross directional elongation. In this regard, an opacity-cross dimensional tensile strength index was calculated for each of the above examples using Equation 2, shown below:

$$\text{opacity-cross dimensional tensile strength index} = ((\text{opacity of wipe})$$

$$(\text{cross dimensional tensile strength of wipe}))/(\text{total basis weight of wipe})^2 \qquad (2)$$

The results of the opacity-cross dimensional tensile strength index calculations for each of the examples are provided in Table 3, shown below:

**TABLE 3**

| | | Opacity - CD Tensile Strength Index |
|---|---|---|
| | Patent Code | (OPACITY*CDT)/(B W^2) |
| EXAMPLES | E0 | 1.0 |
| | E1 | 1.1 |
| | E2 | 0.7 |
| | E3 | 1.0 |
| | E4 | 1.1 |
| | E5 | 1.0 |
| | | |
| | | |
| | | |

(continued)

| | Patent Code | Opacity - CD Tensile Strength Index (OPACITY*CDT)/(B W^2) |
|---|---|---|
| COMPARATIVE EXAMPLES | CE1 | 0.3 |
| | CE2 | 0.4 |
| | | |
| | | |
| | CE3 | 0.6 |
| | CE4 | 0.5 |
| | CE5 | 0-4 |
| | CE6 | 0.5 |
| | CE7 | 0.3 |
| | | |
| | | |
| | CE8 | 0.5 |
| | CE9 | 0.7 |
| | CE10 | 0.6 |

The opacity-cross directional tensile strength index data is charted against basis weight for each of the Examples and Comparative Examples 1-9, and the results are shown in the chart provided in FIG. 7, generally designated by reference number 600. Chart 600 shows that the wipe according to the present invention consistently provides a higher opacity-cross directional tensile strength index (i.e., a combination of both higher opacity and higher cross dimensional tensile strength) as compared to conventional wipe constructions, particularly at low basis weights. In this regard, the wipe according to an exemplary embodiment of the present invention may have an opacity-cross directional tensile strength index of at least 0.5.

In addition, a combination index was calculated for each of the above examples using Equation 3, shown below:

$$\text{combination index} = [((\text{opacity of the wipe})(\text{cross dimensional tensile strength of the wipe})(1/\text{cross dimensional elongation of the wipe}))/(\text{total basis weight of the wipe})^3](10000) \qquad (3)$$

The results of the combination index calculations for each of the examples are provided in Table 4, shown below:

**TABLE 4**

| | Patent Code | COMBINATION INDEX (OP*CDT*(1/CDE))/ (BW^3) times 10000 |
|---|---|---|
| EXAMPLES | E0 | 3.8 |
| | E1 | 4.2 |
| | E2 | 2.7 |
| | E3 | 3.5 |
| | E4 | 4.3 |
| | E5 | 4.2 |

(continued)

| | Patent Code | COMBINATION INDEX (OP*CDT*(1/CDE))/ (BW^3) times 10000 |
|---|---|---|
| | | |
| | | |
| | | |
| COMPARATIVE EXAMPLES | CE1 | 0.6 |
| | CE2 | 0.8 |
| | | |
| | CE3 | 1.2 |
| | CE4 | 0.7 |
| | CE5 | 0.7 |
| | CE6 | 0.6 |
| | CE7 | 0.5 |
| | | |
| | | |
| | CE8 | 1.3 |
| | CE9 | 1.2 |
| | CE10 | 1.6 |

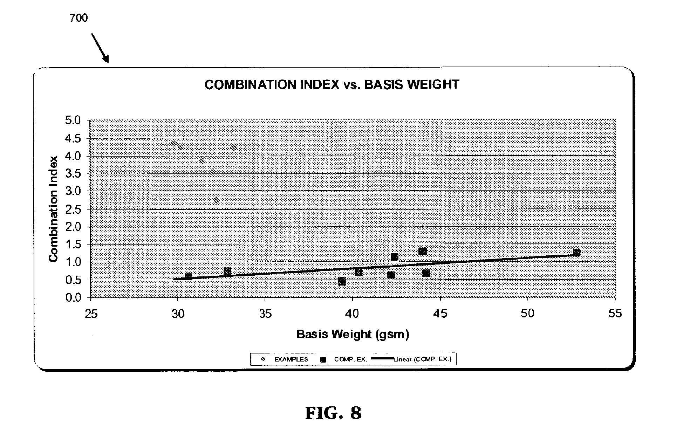

The combination index data from Table 4 is charted against basis weight for each of the Examples and Comparative Examples 1-9, and the results are shown in the chart provided in FIG. 8, generally designated by reference number 700. Chart 700 shows that the wipe according to the present invention consistently provides a higher combination index (i.e., a combination of higher opacity, higher cross dimensional tensile strength and lower cross dimensional elongation) as compared to conventional wipe constructions, particularly at low basis weights. In this regard, the wipe according to an exemplary embodiment of the present invention may have a combination index of at least 0.7.

**Claims**

1. A wipe comprising:

at least one non-woven web layer of discontinuous fibers; and
a spunbond-meltblown-spunbond web layer of continuous fibers positioned in facing and adjacently contacting relation with the at least one non-woven web layer, wherein the at least one non-woven web layer and the spunbond-meltblown-spunbond web layer are bonded together by hydroentanglement, and wherein the wipe has an opacity index of at least 1.3, where the opacity index is calculated based on the following equation:

$$\text{opacity index} = (\text{opacity of the wipe})/(\text{total basis weight of the wipe}).$$

2. The wipe of claim 1, wherein the at least one non-woven web layer comprises a first non-woven web layer and a second non-woven web layer, the spunbond-meltblown-spunbond web layer disposed between the first and second non-woven web layers.

3. The wipe of claim 1, wherein the discontinuous fibers comprise rayon fibers, natural fibers and polymeric fibers; wherein the natural fibers preferably comprise at least one of the following natural fiber types: cotton, bamboo, hemp, and pulp; and/or wherein the polymeric fibers preferably comprise at least one of the following polymeric fiber types: polypropylene, polyester and polylactide.

4. The wipe of claim 1, wherein the at least one non-woven web layer is one of the following types of web layers: carded fiber web layer, air-laid fiber web layer, wet-laid fiber web layer or combinations thereof
and/or
wherein the at least one non-woven web layer has a basis of weight within the range of approximately 5 gsm to approximately 55 gsm.

5. The wipe of claim 1, wherein the spunbond-meltblown-spunbond web layer comprises polypropylene or polylactide;
and/or
wherein the spunbond-meltblown-spunbond web layer is unbonded or bonded;
and/or
wherein the spunbond-meltblown-spunbond web layer has a basis of weight within the range of approximately 5 gsm to approximately 35 gsm.

6. The wipe of claim 1, further comprising a liquid;
and/or
wherein the total basis weight of the wipe is at least 20 gsm;
and/or
wherein the ratio of tensile strength in the machine direction of the wipe relative to tensile strength in the cross direction of the wipe is within the range of approximately 2.0 to approximately 3.0;
and/or
wherein the ratio of percentage elongation in the cross direction of the wipe relative to percentage elongation in the machine direction of the wipe is within the range of approximately 1.0 to approximately 1.5.

7. The wipe of claim 1, wherein the wipe has an opacity-cross dimensional tensile strength index of at least 0.5, where the opacity-cross dimensional tensile strength index is calculated based on the following equation:

$$\text{opacity-cross dimensional tensile strength index} = ((\text{opacity of the wipe})(\text{cross dimensional tensile strength of the wipe}))/(\text{total basis weight of the wipe})^2;$$

wherein the wipe particularly has an opacity-cross dimensional tensile strength index of at least 0.7, preferably within the range of 0.7 - 1.1 or of at least 1.1.

8. The wipe of claim 1, wherein the opacity of the wipe is at least 40%;
and/or
wherein the wipe has an opacity index of at least 1.6, preferably within the range of 1.6 - 1.7 or of at least 1.7.

9. The wipe of claim 1, wherein the wipe has a combination index of at least 0.7, where the combination index is calculated based on the

$$\text{following equation: combination index} = [((\text{opacity of the wipe})(\text{cross dimensional tensile strength of the wipe})(1/\text{cross dimensional elongation of the wipe}))/(\text{total basis weight of the wipe})^3](10000);$$

wherein the wipe particularly has a combination index of at least 2.7, preferably within the range of 2.7 - 4.3 or of at least 4.3.

10. A method of forming a wipe, comprising the steps of:

forming at least one non-woven web layer of discontinuous fibers;
forming a spunbond-meltblown-spunbond web layer of continuous fibers; and

bonding the at least one non-woven web layer with the spunbond-meltblown-spunbond web layer by hydroentanglement, wherein the wipe has an opacity index of at least 1.3, where the opacity index is calculated based on the following equation:

$$opacity\ index = (opacity\ of\ the\ wipe)/(total\ basis\ weight\ of\ the\ wipe).$$

11. The method of claim 10, wherein the step of forming the at least one non-woven web layer comprises forming a first non-woven web layer and a second non-woven web layer, the method preferably further comprising disposing the spunbond-meltblown-spunbond web layer between the first and second non-woven web layers;
and/ or
wherein the step of forming the at least non-woven web layer comprises using at least one of the following types of web-formation processes: carding, airlaying and wetlaying.

12. The method of claim 10, further comprising bonding the at least one non-woven web layer, wherein the step of bonding the at least one non-woven web layer preferably comprises using at least one of the following bonding processes: hydroentanglement, thermal bonding, chemical bonding and mechanical bonding;
and/or
the method further comprising bonding the spunbond-meltblown-spunbond web layer.

13. The method of claim 10, wherein the wipe has an opacity index of at least 1.6, preferably within the range of 1.6 - 1.7 or of at least 1.7.

**Patentansprüche**

1. Wischtuch, umfassend:

zumindest eine nicht gewebte Gewebeschicht aus diskontinuierlichen Fasern; und
eine Spinnvlies-Meltblownvlies-Spinnvlies-Gewebeschicht aus kontinuierlichen Fasern, die in zueinander weisender und benachbart in Kontakt stehender Beziehung mit der zumindest einen nicht gewebten Gewebeschicht positioniert sind, wobei die zumindest eine nicht gewebte Gewebeschicht und die Spinnvlies-Meltblownvlies-Spinnvlies-Gewebeschicht durch Hydroverschlingung miteinander verbunden sind, und wobei das Wischtuch einen Opazitätsindex von zumindest 1,3 besitzt, wobei der Opazitätsindex auf Grundlage der folgenden Gleichung berechnet wird:

$$Opazit\ddot{a}tsindex = (Opazit\ddot{a}t\ des\ Wischtuches)/(Gesamtbasisgewicht\ des\ Wischtuchs).$$

2. Wischtuch nach Anspruch 1, wobei die zumindest eine nicht gewebte Gewebeschicht eine erste nicht gewebte Gewebeschicht und eine zweite nicht gewebte Gewebeschicht umfasst, wobei die Spinnvlies-Meltblownvlies-Spinnvlies-Gewebeschicht zwischen der ersten und zweiten nicht gewebten Gewebeschicht angeordnet ist.

3. Wischtuch nach Anspruch 1, wobei die diskontinuierlichen Fasern Rayonfasern, natürliche Fasern und Polymerfasern umfassen;
wobei die natürlichen Fasern bevorzugt zumindest einen der folgenden Typen von natürlichen Fasern umfassen: Baumwolle, Bambus, Hanf und Faserstoff; und/oder
wobei die Polymerfasern bevorzugt zumindest einen der folgenden Typen von Polymerfasern umfassen: Polypropylen, Polyester und Polylactid.

4. Wischtuch nach Anspruch 1, wobei die zumindest eine nicht gewebte Gewebeschicht einer der folgenden Typen von Gewebeschichten ist: eine Gewebeschicht aus kardierten Fasern, eine Gewebeschicht mit aerodynamisch gelegten Fasern, eine Gewebeschicht mit hydrodynamisch gelegten Fasern oder Kombinationen daraus;
und / oder
wobei die zumindest eine nicht gewebte Gewebeschicht eine Gewichtsbasis im Bereich von etwa 5 gsm bis etwa 55 gsm besitzt.

5. Wischtuch nach Anspruch 1, wobei die Spinnvlies-Meltblownvlies-Spinnvlies-Gewebeschicht Polypropylen oder Polylactid umfasst;
und/oder
wobei die Spinnvlies-Meltblownvlies-Spinnvlies-Gewebeschicht nicht gebunden oder gebunden ist;
und/oder
wobei die Spinnvlies-Meltblownvlies-Spinnvlies-Gewebeschicht eine Gewichtsbasis im Bereich von etwa 5 gsm bis etwa 35 gsm besitzt.

6. Wischtuch nach Anspruch 1, ferner mit einer Flüssigkeit;
und/oder
wobei das Gesamtbasisgewicht des Wischtuchs zumindest 20 gsm beträgt;
und/oder
wobei das Verhältnis der Zugfestigkeit in der Maschinenrichtung des Wischtuchs relativ zu der Zugfestigkeit in der Querrichtung des Wischtuches im Bereich von etwa 2,0 bis etwa 3,0 liegt;
und/ oder
wobei das Verhältnis der prozentualen Elongation in der Querrichtung des Wischtuches relativ zu der prozentualen Elongation in der Maschinenrichtung des Wischtuches im Bereich von etwa 1,0 bis etwa 1,5 liegt.

7. Wischtuch nach Anspruch 1, wobei das Wischtuch einen Opazitätsindex der Zugfestigkeit in der Querabmessung von zumindest 0,5 besitzt, wobei der Opazitätsindex der Zugfestigkeit in der Querabmessung auf Grundlage der folgenden Gleichung berechnet wird:

$$\text{Opazitätsindex der Zugfestigkeit in der Querabmessung} =$$

$$((\text{Opazität des Wischtuches}) \, (\text{Zugfestigkeit in der Querabmessung}$$

$$\text{des Wischtuches})) / (\text{Gesamtbasisgewicht des Wischtuches})^2;$$

wobei das Wischtuch insbesondere einen Opazitätsindex der Zugfestigkeit in der Querabmessung von zumindest 0,7, bevorzugt im Bereich von 0,7 - 1,1 oder von zumindest 1,1 besitzt.

8. Wischtuch nach Anspruch 1, wobei die Opazität des Wischtuches zumindest 40 % beträgt;
und/ oder
wobei das Wischtuch einen Opazitätsindex von zumindest 1,6, bevorzugt im Bereich von 1,6 - 1,7 oder von zumindest 1,7 besitzt.

9. Wischtuch nach Anspruch 1, wobei das Wischtuch einen Kombinationsindex von zumindest 0,7 besitzt, wobei der Kombinationsindex

$$\text{auf Grundlage der folgenden Gleichung berechnet wird: Kombinationsindex} = [((\text{Opazität des Wischtuchs}) (\text{Zugfestigkeit des Wischtuchs in der Querabmessung}) (1 / \text{Elongation des Wischtuches in der Querabmessung})) / (\text{Gesamtbasisgewicht des Wischtuchs})^3] \, (10000);$$

wobei das Wischtuch insbesondere einen Kombinationsindex von zumindest 2,7, bevorzugt im Bereich von 2,7 - 4,3 oder von zumindest 4,3 besitzt.

10. Verfahren zum Bilden eines Wischtuchs, mit den Schritten:

Bilden zumindest einer nicht gewebten Gewebeschicht aus diskontinuierlichen Fasern;
Bilden einer Spinnvlies-Meltblownvlies-Spinnvlies-Gewebeschicht aus kontinuierlichen Fasern;
und
Verbinden der zumindest einen nicht gewebten Gewebeschicht mit der Spinnvlies-Meltblownvlies-Spinnvlies-Gewebeschicht durch Hydroverschlingung, wobei das Wischtuch einen Opazitätsindex von zumindest 1,3 besitzt, wobei der Opazitätsindex auf Grundlage der folgenden Gleichung berechnet wird:

$$\text{Opazitätsindex} = (\text{Opazität des Wischtuchs})/(\text{Gesamtbasisgewicht des Wischtuches}).$$

**11.** Verfahren nach Anspruch 10, wobei der Schritt zum Bilden der zumindest einen nicht gewebten Gewebeschicht ein Bilden einer ersten nicht gewebten Gewebeschicht und einer zweiten nicht gewebten Gewebeschicht umfasst, wobei das Verfahren bevorzugt ferner ein Anordnen der Spinnvlies-Meltblownvlies-Spinnvlies-Gewebeschicht zwischen der ersten und zweiten nicht gewebten Gewebeschicht umfasst;
und/oder
wobei der Schritt zum Bilden der zumindest einen nicht gewebten Gewebeschicht die Verwendung von zumindest einem der folgenden Typen von Gewebebildungsprozessen umfasst: Kardieren, aerodynamisches Legen und hydrodynamisches Legen.

**12.** Verfahren nach Anspruch 10, ferner mit einem Verbinden der zumindest einen nicht gewebten Gewebeschicht, wobei der Schritt zum Verbinden der zumindest einen nicht gewebten Gewebeschicht bevorzugt die Verwendung zumindest eines der folgenden Verbindungsprozesse umfasst: Hydroverschlingung, thermisches Verbinden, chemisches Verbinden und mechanisches Verbinden;
und / oder
wobei das Verfahren ferner ein Verbinden der Spinnvlies-Meltblownvlies-Spinnvlies-Gewebeschicht umfasst.

**13.** Verfahren nach Anspruch 10, wobei das Wischtuch einen Opazitätsindex von zumindest 1,6, bevorzugt im Bereich von 1,6 - 1,7 oder von zumindest 1,7 besitzt.

**Revendications**

**1.** Lingette, comprenant :

au moins une couche de nappe non-tissée de fibres discontinues, et
une couche de nappe "spunbond-meltblown-spunbond" ("extrusion-collage/fusion-soufflage/extrusion-collage) de fibres continues positionnées en relation face à face et en contact adjacent avec ladite au moins une couche de nappe non-tissée, dans laquelle ladite au moins une couche de nappe non-tissée et la couche de nappe spunbond-meltblown-spunbond sont collées ensemble par hydro-entremêlement, et dans laquelle la lingette présente un index d'opacité d'au moins 1,3, ledit index d'opacité étant calculé sur la base de l'équation suivante :

$$\text{index d'opacité} = (\text{opacité de la lingette})/(\text{poids de base total de la lingette}).$$

**2.** Lingette selon la revendication 1, dans laquelle ladite au moins une couche de nappe non-tissée comprend une première couche de nappe non-tissée et une seconde couche de nappe non-tissée, la couche de nappe spunbond-meltblown-spunbond étant disposée entre la première et la seconde couche de nappe non-tissée.

**3.** Lingette selon la revendication 1, dans laquelle les fibres discontinues comprennent des fibres de rayonne, des fibres naturelles et des fibres polymères ;
dans lesquelles les fibres naturelles comprennent de préférence au moins un des types de fibres naturelles suivant : coton, bambou, chanvre et pulpe ; et/ou
dans laquelle les fibres polymères comprennent de préférence au moins un des types de fibres polymères suivants : polypropylène, polyester et polylactide.

**4.** Lingette selon la revendication 1, dans laquelle ladite au moins une couche de nappe non-tissée est une couche de nappe de l'un des types suivants : couche de nappe de fibres cardées, couche de nappe de fibres déposées à l'air, couche de nappe de fibres déposées par voie humide, ou des combinaisons de ces types
et/ou

dans laquelle ladite au moins une couche de nappe non-tissée présente un poids de base dans la plage d'approximativement 5 gsm à approximativement 55 gsm.

5. Lingette selon la revendication 1, dans laquelle la couche de nappe spunbond-meltblown-spunbond comprend du polypropylène ou du polylactide ;
et/ou
dans laquelle la couche de nappe spunbond-meltblown-spunbond est non collée ou collée ;
et/ou
dans laquelle la couche de nappe spunbond-meltblown-spunbond présente un poids de base dans la plage d'approximativement 5 gsm à approximativement 35 gsm.

6. Lingette selon la revendication 1, comprenant en outre un liquide ; et/ou
dans laquelle le poids de base total de la lingette est au moins 20 gsm ; et/ou
dans laquelle le rapport de la résistance en traction dans la direction machine de la lingette par rapport à la résistance en traction dans la direction transversale de la lingette est dans la plage d'approximativement 2,0 à approximativement 3,0 ;
et/ou
dans laquelle le rapport du pourcentage d'allongement dans la direction transversale de la lingette par rapport au pourcentage d'allongement dans la direction de la machine de la lingette est dans la plage d'approximativement 1,0 à approximativement 1,5.

7. Lingette selon la revendication 1, dans laquelle la lingette présente un index "opacité-résistance à la traction en dimension transversale" d'au moins 0,5, dans laquelle l'index "opacité-résistance à la traction en dimension transversale" est calculé sur la base de l'équation suivante :

$$\text{index "opacité-résistance à la traction en dimension transversale"} = ((\text{opacité de la lingette})(\text{résistance à la traction en dimension transversale de la lingette}))/(\text{poids total de base de la lingette})^2 \ ;$$

dans laquelle la lingette présente en particulier un index "opacité-résistance à la traction en dimension transversale" d'au moins 0,7, de préférence dans la plage de 0,7 à 1,1, ou d'au moins 1,1.

8. Lingette selon la revendication 1, dans laquelle l'opacité de la lingette est au moins 40 % ;
et/ou
dans laquelle la lingette a un index d'opacité d'au moins 1,6 de préférence dans la plage de 1,6 à 1,7, ou d'au moins 1,7.

9. Lingette selon la revendication 1, dans laquelle la lingette présente un index de combinaison d'au moins 0,7, l'index de combinaison étant calculé sur la base de l'équation suivante :

$$\text{index de combinaison} = [((\text{opacité de la lingette}) \ (\text{résistance à la traction en dimension transversale de la lingette}) \ (1/\text{allongement en dimension transversale de la lingette}))/\text{poids de base total de la lingette})^3](10\ 000) \ ;$$

dans laquelle la lingette a en particulier un index de combinaison d'au moins 2,7, de préférence dans la plage de 2,7 à 4,3, ou d'au moins 4,3.

10. Procédé pour former une lingette, comprenant les étapes consistant à:

former au moins une couche de nappe non-tissée de fibres discontinues ;
former une couche de nappe spunbond-meltblown-spunbond de fibres continues ; et
coller ladite au moins une couche de nappe non-tissée avec la couche de nappe spunbond-meltblown-spunbond par hydro-entremêlement, dans lequel la lingette présente un index d'opacité d'au moins 1,3, ledit index d'opacité étant calculé sur la base de l'équation suivante :

$$\text{index d'opacité} = (\text{opacité de la lingette})/(\text{poids total de base de la lingette}).$$

**11.** Procédé selon la revendication 10, dans lequel l'étape consistant à former ladite au moins une couche de nappe non-tissée comprend de former une première couche de nappe non-tissée et une seconde couche de nappe non-tissée, le procédé comprenant de préférence en outre de disposer la couche de nappe spunbond-meltblown-spunbond entre la première et la seconde couche de nappe non-tissée ;
et/ou
dans lequel l'étape consistant à former ladite couche de nappe non-tissée comprend d'utiliser au moins un des types suivants de processus de formation de nappe :
carde, dépose à l'air et dépose par voie humide.

**12.** Procédé selon la revendication 10, comprenant en outre de coller ladite au moins une couche de nappe non-tissée, dans lequel l'étape consistant à coller ladite au moins une couche de nappe non-tissée comprend de préférence d'utiliser l'un au moins des processus de collage suivants : hydro-entremêlement, collage thermique, collage chimique et collage mécanique ;
et/ou
le procédé comprenant en outre de coller la couche de nappe spunbond-meltblown-spunbond.

**13.** Procédé selon la revendication 10, dans lequel la lingette présente un index d'opacité d'au moins 1,6, de préférence dans la plage de 1,6 à 1,7, ou d'au moins 1,7.

1

10

20

**FIG. 1**

100

110          120

130

**FIG. 2**

200

FORM NONWOVEN
WEB LAYERS OF
DISCONTINUOUS FIBERS — 210

↓

FORM SMS WEB LAYER
OF CONTINUOUS FIBERS — 220

↓

BOND SMS WEB LAYER
(OPTIONAL) — 230

↓

BOND SMS WEB LAYER
BETWEEN NONWOVEN
WEB LAYERS — 240

**FIG. 3**

FIG. 4

FIG. 5

500

### ELONGATION RATIO vs. BASIS WEIGHT

**FIG. 6**

600

### OPACITY - CD TENSILE STRENGTH INDEX vs. BASIS WEIGHT

**FIG. 7**

700

FIG. 8

**EP 2 331 854 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5229191 A
- WO 9855295 A1
- US 20040121135 A1